# FASCICULE DE BREVET EUROPEEN

(11) **EP 1 184 585 B1**
(45) Date de publication et mention de la délivrance du brevet: **21.10.2009**
(21) Numéro de dépôt: 01401858.4
(22) Date de dépôt: 11.07.2001
(51) Int. Cl.: F16D 23/06

(54) **Dispositif de maintien d'un billage dans un moyeu d'un ensemble synchroniseur pour véhicule automobile**
Einrichtung um eine Kugel in der Nabe einer Synchronisiereinrichtung für Kraftfahrzeuge zu halten
Device to maintain a thrust member in a hub of a synchroniser assembly for a motor vehicle

(30) Priorité: 29.08.2000 FR 0011012
(43) Date de publication de la demande: 06.03.2002
(73) Titulaire: Peugeot Citroën Automobiles, 92200 Neuilly Sur Seine (FR)
(72) Inventeur: Wascheul, Michael, 78260 Acheres (FR)
(74) Mandataire: De Cuenca, Emmanuel Jaime

(56) Documents cités:
- DE-C- 19 580 558
- GB-A- 2 029 519
- US-A- 2 221 900
- PATENT ABSTRACTS OF JAPAN vol. 1995, no. 10, 30 novembre 1995 (1995-11-30) & JP 07 190091 A (KANZAKI KOKYUKOKI MFG CO LTD), 28 juillet 1995 (1995-07-28)

## Description

La présente invention concerne un dispositif de maintien d'au moins un billage muni de pattes qui viennent prendre appui contre les parois d'une rainure pratiquée à la périphérie d'un moyeu de synchronisation destiné à être utilisé dans un ensemble synchroniseur pour une transmission d'un véhicule automobile.

Elle concerne également un ensemble synchroniseur pour une transmission de véhicule automobile du type « Borg-Warner » comprenant un tel dispositif.

Le fonctionnement d'un synchroniseur se compose de plusieurs phases à partir de la phase de point mort de la transmission et comprenant la phase d'armement, la phase de synchronisation et la phase de crabotage.

Dans les synchroniseurs du type « Borg-Warner » à trois bosses actuellement connus, il se peut que, lors de la phase d'armement, la force avec laquelle le conducteur désire enclencher un rapport de vitesses est trop importante au point que l'action du manchon baladeur sur les billages laisse échapper ces derniers des rainures du moyeu dans lesquelles ils sont logés. Une fois les billages échappés de leurs rainures respectives, il s'avère très difficile pour le conducteur de réarmer le synchroniseur. On connaît de tels billages, notamment du document DE 195 80 558C.

Le but de l'invention est alors de remédier à cet inconvénient et notamment de proposer un dispositif du type de celui mentionné ci-dessus qui permette l'armement et le réarmement du synchroniseur qui en est muni de manière aisée et reproductible.

A cet effet, l'invention a pour objet un dispositif de maintien d'au moins un billage dans un moyeu de synchronisation destiné à être utilisé dans un ensemble synchroniseur pour une transmission d'un véhicule automobile conforme à l'objet de la revendication 1,

Ainsi, en prévoyant de tels moyens de retenue dans un synchroniseur équipant les boîtes de vitesse, la course en translation des billages est arrêtée lors du passage des vitesses.

Avantageusement, et pour faciliter la réalisation, le trou est débouchant et le doigt est un ergot.

De préférence; les dimensions du trou et celles du doigt sont adaptées pour laisser un jeu suffisant entre le trou et le doigt logé à l'intérieur de manière à compenser l'usure de la bague de synchronisation équipant l'ensemble synchroniseur.

De préférence encore, le doigt est de forme parallépipédique.

Avantageusement, le doigt est venu de matière avec le moyeu, de préférence en matière frittée.

Selon une variante préférée, lorsque la rainure a une forme en T, le trou est une fente ménagée dans les deux parties de la patte en appui contre la rainure, la patte étant recourbée en forme de U.

Selon cette variante préférée, lorsque le moyeu comporte trois rainures à l'intérieur de chacune desquelles est logé un billage, chaque billage présente deux pattes symétriques l'une de l'autre par rapport au corps du billage.

L'invention concerne également un ensemble synchroniseur pour une transmission de véhicule automobile du type « Borg-Wagner » comprenant un dispositif mentionné ci-dessus et un pignon de transmission du cinquième rapport d'une boîte de vitesses.

D'autres avantages et caractéristiques de l'invention ressortiront mieux à la lecture de la description détaillée d'un exemple de ralisation faite en référence aux figures 1 à 3 qui représentent respectivement :
- figure 1 est une vue éclatée en perspective d'un ensemble synchroniseur pour une transmission de véhicule automobile conforme à l'invention ;
- figures 2a et 2b sont des vues agrandies en perspective d'un dispositif selon l'invention avant et après logement du billage dans la rainuredu moyeu;
- figure 3 est une vue schématisée en coupe longitudinale d'un ensemble selon la figure 1 monté sur un arbre de boîte.

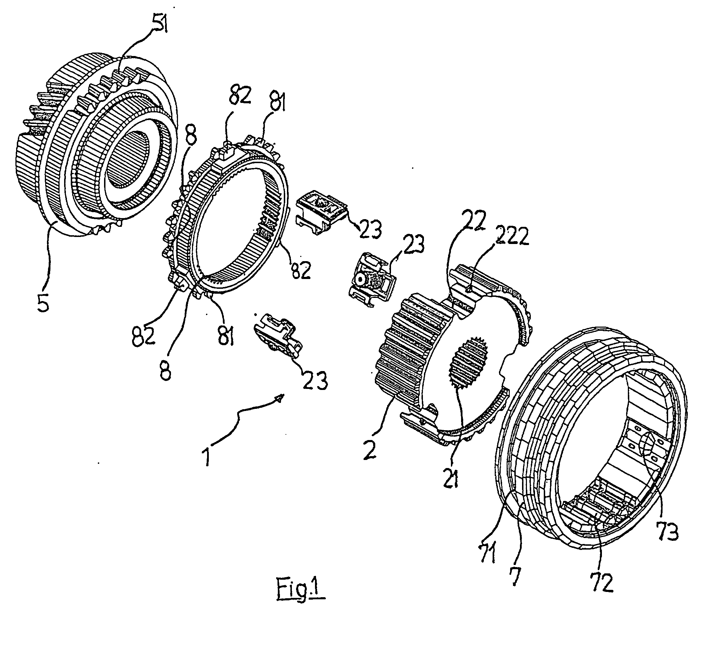

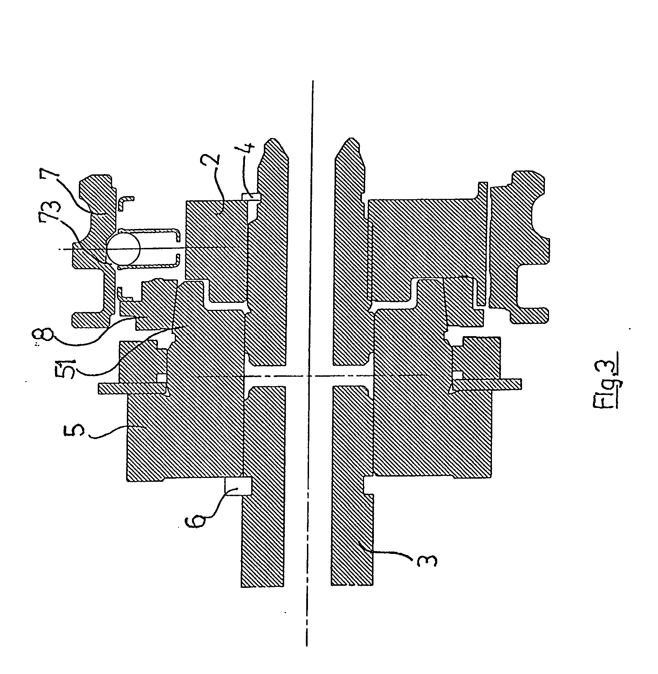

En se référant aux figures 1 et 3, l'ensemble synchroniseur 1 pour une transmission d'un véhicule automobile selon l'invention comprend un moyeu de synchronisation 2 solidaire en rotation d'un arbre mené 3 par l'intermédiaire de cannelures 21 (non représentées pour l'arbre. Ce moyeu de synchronisation 2 est immobilisé en translation sur l'arbre 3 d'une part par un premier anneau d'arrêt 4 monté dans une première gorge périphérique externe de l'arbre 3 et d'autre part par la face radiale d'un pignon de transmission 5(qui dans l'exemple, illustratif mais non limitatif, est le pignon d'engagement du 5^{ème} rapport) monté tourillonnant sur l'arbre 3 et lui-même immobilisé en translation par un deuxième anneau d'arrêt 6 monté dans une seconde gorge périphérique externe de l'arbre.

L'ensemble synchroniseur 1 comprend également un manchon de crabotage 7 apte à être déplacé axialement parallèlement à l'arbre 3 au moyen d'une fourchette de commande (non représentée) engagée dans une gorge externe radiale 71. Ce manchon 7 comporte des cannelures internes 72 adaptées pour assurer l'engrènement du manchon 7 autour du moyeu 2 tout en autorisant le déplacement axial de l'un par rapport à l'autre. Le manchon 7 comporte également trois gorges angulairement équidistantes adaptées pour recevoir les billes décrites ci-dessous.

L'ensemble synchroniseur 1 comprend également une bague de synchronisation 8 située adjacente au moyeu de synchronisation 2. Cette bague 8 est apte à être déplacée vers le pignon de transmission 5 et engagée par friction avec celui-ci par déplacement du manchon 7. Cette bague 8 comporte trois secteurs dentés 81 angulairement équidistants à 120° situés à l'extérieur du moyeu 2 ainsi que trois tocs 82 répartis de manière identique qui viennent se loger dans les rainures annulaires 22 du moyeu 2 angulairement équidistantes correspondantes.

Le pignon de transmission 5 comprend une couronne dentée extérieure 51 sur laquelle le manchon de crabotage 7 peut venir en engrènement.

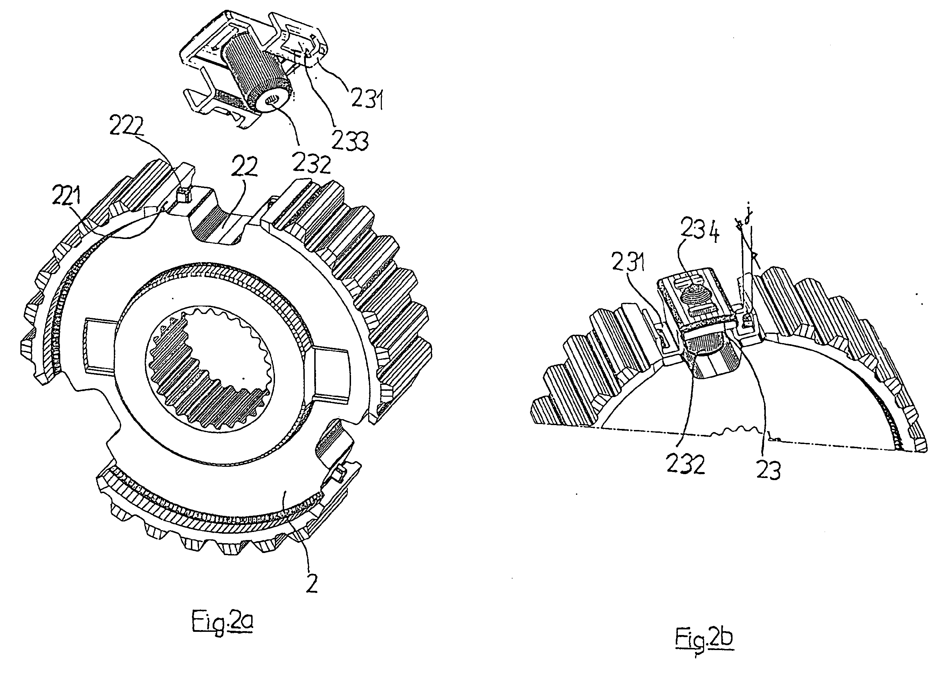

Le dispositif selon l'invention, qui permet de maintenir chaque billage 23 dans la rainure 22 correspondante en forme de T, pratiquée à la périphérie du moyeu de synchronisation 2 parallèlement à l'axe du moyeu 2, est représenté plus en détail aux figures 2a et 2b.

Chaque billage 23 présente deux pattes 231 recourbées en forme de U disposées symétriquement l'une et l'autre par rapport au corps du billage 232 en appui sur le fond de la rainure 22. Chacune des pattes 231 est percée d'une fente 233 débouchante de forme rectangulaire et ménagée dans les deux parties de la patte 231 en appui contre les parties latérales 221 de la rainure 22 en forme de T.

Un ergot 222 de forme parallèlépipédique est situé au milieu de chacune des deux parties latérales 221.Cet ergot 222 sort brut de frittage avec le moyeu 2.

Les dimensions de la fente 233 et celles de l'ergot 222 sont telles qu'un jeu j suffisant subsiste entre eux après logement du billage dans la rainure 22. Ce jeu compense l'usure de la bague de synchronisation 8.

Le fonctionnement de l'ensemble synchroniseur 1 et du dispositif selon l'invention qui viennent d'être décrits va maintenant être fait.

Lors de la phase d'armement,sous l'action de la poussée de la fourchette de commande non représentée, le manchon baladeur 7 vient se déplacer autour du moyeu 2 et tend à glisser sur chacun des billages 23 en les déplaçant. Ce déplacement permet de transformer un effort radial en un effort axial des billes 234, sous la poussée des corps du billage 232 en appui dans les rainures 22, effort qui est transmis à la bague de synchronisation 8. Cet effort permet de maintenir dans une position précise les dents de la bague 81 vis à vis des cannelures internes 72 du manchon 7 pendant toute la phase d'essorage au cours de laquelle l'huile en la bague de synchronisation 8 et le pignon de transmission 5 est évacuée. Les autres phases de la synchronisation peuvent alors se dérouler de manière connue en soi.

Lors de la phase de réarmement, c'est à dire lors du retour du manchon 7 vers le point mort, chacune des billes 234 retourne dans la gorge correspondante 73 du manchon 7 jusqu'à ce que chacun des deux ergots 222 vienne en butée contre l'extrémité de la fente 233. Les billages 23 sont donc arrêtés axialement par les ergots 222, ce qui élimine tout risque d'échappement du moyeu 2.

L'invention permet avantageusement le transport du dispositif sous ensemble du synchroniseur par une préhension manuelle aisée par l'extérieur. Elle permet également la simplification de définition de la butée de réarmement du rapport engagé concerné tel que le cinquième rapport.

Il va de soi bien entendu que différents modes de réalisation d'un tel système peuvent être envisagés sans pour autant sortir du cadre de l'invention et éviter tout délogement du billage 23 de sa rainure 22 correspondante.

## Revendications

1. Dispositif de maintien d'au moins un billage (23) dans un moyeu de synchronisation (2) destiné à être utilisé dans un ensemble synchroniseur pour une transmission d'un véhicule automobile, le billage étant muni de pattes (231) qui viennent prendre appui contre les parois (221) d'une rainure (22) en forme de « T » pratiquée à la périphérie du moyeu, parallèlement à l'axe du moyeu, **caractérisé en ce qu'**au moins une des pattes (231) comporte un trou (233) de forme adaptée pour loger un doigt (222) fixé à la paroi (221) de la rainure correspondante.

2. Dispositif selon la revendication 1, **caractérisé en ce que** le trou est débouchant et **en ce que** le doigt est un ergot.

3. Dispositif selon la revendication 1 ou 2, **caractérisé en ce que** les dimensions du trou et celles du doigt sont adaptées pour laisser un jeu suffisant entre le trou et le doigt logé à l'intérieur de manière à compenser l'usure de la bague de synchronisation (8).

4. Dispositif selon l'une des revendications précédentes, **caractérisé en ce que** le doigt est de forme parallépipédique.

5. Dispositif selon l'une des revendications précédentes, **caractérisé en ce que** le doigt est venu de matière avec le moyeu, de préférence en matière frittée.

6. Dispositif selon l'une des revendications précédentes, dans lequel la rainure a une forme en T, **caractérisé en ce que** le trou est une fente (233) ménagée dans les deux parties de la patte en appui contre la rainure, la patte étant recourbée en forme de U.

7. Dispositif selon la revendication 6, dans lequel le moyeu comporte trois rainures (22) à l'intérieur de chacune desquelles est logé un billage (23) **caractérisé en ce que** chaque billage (23) présente deux pattes (231) symétriques l'une de l'autre par rapport au corps du billage (232).

8. Ensemble synchroniseur (1) pour une transmission de véhicule automobile du type « Borg-Warner » comprenant un dispositif selon l'une des revendications précédentes et un pignon de transmission (5) du cinquième rapport d'une boîte de vitesses.

## Claims

1. Device for holding at least one ball device (23) in a synchronization hub (2) designed to be used in a synchronizer assembly for a transmission of a motor vehicle, the ball device being furnished with mounts (231) which rest against the walls (221) of a T-shaped groove (22) made on the periphery of the hub, parallel to the axis of the hub, **characterized in that** at least one of the mounts (231) comprises a hole (233) of a shape suitable to house a finger (222) attached to the wall (221) of the corresponding groove.

2. Device according to Claim 1, **characterized in that** the hole is a through hole and **in that** the finger is a locator.

3. Device according to Claim 1 or 2, **characterized in that** the dimensions of the hole and those of the finger are suitable for leaving a sufficient clearance between the hole and the finger housed inside in order to compensate for the wear of the blocking ring (8).

4. Device according to one of the preceding claims, **characterized in that** the finger has a parallelepipedal shape.

5. Device according to one of the preceding claims, **characterized in that** the finger is made of the same material and in one piece with the hub, preferably made of sintered material.

6. Device according to one of the preceding claims, in which the groove is T-shaped, **characterized in that** the hole is a slot (233) arranged in both portions of the mount resting against the groove, the mount being curved in the shape of a U.

7. Device according to Claim 6, in which the hub comprises three grooves (22), inside each of which a ball device (23) is housed, **characterized in that** each ball device (23) has two mounts (231) symmetrical with one another relative to the body of the ball device (232).

8. Synchronizer assembly (1) for a "Borg-Warner" motor-vehicle transmission comprising a device according to one of the preceding claims and a transmission gear (5) of the fifth ratio of a gearbox.

## Patentansprüche

1. Vorrichtung zum Halt mindestens einer Kugelrolle (23) in einer Synchronisationsnabe (2), die dazu bestimmt ist, in einer Synchronisationseinheit für ein Getriebe eines Kraftfahrzeugs verwendet zu werden, wobei die Kugelrolle mit Laschen (231) versehen ist, die gegen die Wände (221) einer "T"-förmigen Rille (22) anliegen, die am Umfang der Nabe parallel zur Achse der Nabe ausgebildet ist, **dadurch gekennzeichnet, dass** mindestens eine der Laschen (231) ein Loch (233) geeigneter Form aufweist, um einen an der Wand (221) der entsprechenden Rille befestigten Finger (222) aufzunehmen.

2. Vorrichtung nach Anspruch 1, **dadurch gekennzeichnet, dass** das Loch ein Durchgangsloch und der Finger ein Zapfen ist.

3. Vorrichtung nach Anspruch 1 oder 2, **dadurch gekennzeichnet, dass** die Abmessungen des Lochs und diejenigen des Fingers geeignet sind, um ein ausreichendes Spiel zwischen dem Loch und dem in dessen Inneren angeordneten Finger zu lassen, um die Abnutzung des Synchronisationsrings (8) zu kompensieren.

4. Vorrichtung nach einem der vorhergehenden Ansprüche, **dadurch gekennzeichnet, dass** der Finger eine parallelepipedische Form hat.

5. Vorrichtung nach einem der vorhergehenden Ansprüche, **dadurch gekennzeichnet, dass** der Finger aus demselben Material wie die Nabe hergestellt ist, vorzugsweise aus Sintermaterial.

6. Vorrichtung nach einem der vorhergehenden Ansprüche, bei der die Rille die Form eines T hat, **dadurch gekennzeichnet, dass** das Loch ein Schlitz (233) ist, der in den zwei Teilen der gegen die Rille anliegenden Lasche ausgebildet ist, wobei die Lasche in Form eines U umgebogen ist.

7. Vorrichtung nach Anspruch 6, wobei die Nabe drei Rillen (22) aufweist, im Inneren von jeder von denen eine Kugelrolle (23) angeordnet ist, **dadurch gekennzeichnet, dass** jede Kugelrolle (23) zwei bezüglich des Körpers der Kugelrolle (232) zueinander symmetrische Laschen (231) aufweist.

8. Synchronisationseinheit (1) für ein Getriebe eines Kraftfahrzeugs vom Typ "Borg-Warner", die eine Vorrichtung nach einem der vorhergehenden Ansprüche und einen Übertragungstrieb (5) des fünften Gangs eines Schaltgetriebes enthält.
